# EUROPEAN PATENT APPLICATION

(11) **EP 3 968 422 A1**
(43) Date of publication of application: **16.03.2022**
(21) Application number: 20204489.7
(22) Date of filing: 28.10.2020
(51) Int. Cl.: H01M 10/04, H01M 50/109, H01M 50/153, H01M 50/184, H01M 50/559, H01M 50/627, H01M 50/636

(54) **BUTTON BATTERY AND MANUFACTURING METHOD THEREFOR**

(30) Priority: 11.09.2020 CN 202010954986
(71) Applicant: Zhuhai Xunda Technology Co., Ltd., Zhuhai City, Guangdong 519000 (CN)
(72) Inventor: LU, Yundong, Zhuhai City, Guangdong 519000 (CN); KUANG, Huaigai, Zhuhai City, Guangdong 519000 (CN); CHEN, Keshun, Zhuhai City, Guangdong 519000 (CN); HUANG, Yanping, Zhuhai City, Guangdong 519000 (CN); YANG, Xiaobin, Zhuhai City, Guangdong 519000 (CN); TANG, Taichun, Zhuhai City, Guangdong 519000 (CN); LI, Cheng, Zhuhai City, Guangdong 519000 (CN); HUANG, Shidong, Zhuhai City, Guangdong 519000 (CN)
(74) Representative: Zoli, Filippo

(57) **Abstract**

Disclosed are a button battery and a manufacturing method therefor, the button battery includes an upper cover plate (100), a pole (200), an insulating sleeve (300), a bottom shell (400), a battery winding core (500) and a sealing ball (600). The upper cover plate (100) is provided with a liquid injection hole (110) and a stepped through hole (120) with a small upper portion and a large lower portion; upper and lower ends of the pole (200) are respectively a cylindrical portion (210) and a head portion (220); the insulating sleeve (300) is sheathed on the pole (200) that penetrates through the stepped through hole (120), the head and cylindrical portions (220, 210) correspond to lower and upper end of the stepped through hole (120) respectively; the battery winding core (500) is arranged in an inner cavity formed by the upper cover plate (100) and the bottom shell (400); and the sealing ball (600) is arranged on the upper cover plate (100) and seals the liquid injection hole (110).

## Description

### FIELD

The present disclosure relates to the field of energy storage devices, and more particularly, to a button battery and a manufacturing method therefor.

### BACKGROUND

Lithium-ion button battery has the characteristics of small volume, stable voltage, wide working temperature range and long storage life, and is widely used in various products such as computer mainboard, calculator, smart watch, remote controller, smart bracelet, TWS Bluetooth headset and electronic toy. The button battery generally includes a shell and a pole penetrating through the shell. At the present stage, the shell and the pole of the button battery have a large volume, especially the pole extends into the shell, which seriously occupies an internal space of the button battery, resulting in a small internal space of the button battery and an inability to effectively use the internal space, thus leading to a small volume and a low capacity of a battery winding core, and an inability to effectively utilize advantages of small size and high energy density of the button battery. Meanwhile, the extended pole may be difficult to be welded with a winding core metal belt, and the pole is easy to fall off from the winding core metal belt, thus bringing some potential safety hazards to the button battery. Moreover, a chemical reaction occurs in the button battery, and leakage is easy to occur to the button battery.

### SUMMARY

The present disclosure is intended to solve at least one of the technical problems in the related technologies. For this purpose, the present disclosure provides a button battery with a compact structure, a large capacity and a good sealing performance.

The present disclosure further provides a method for manufacturing a button battery.

In a first aspect of the present disclosure, a button battery is provided, including: an upper cover plate having a liquid injection hole and a stepped through hole with a small upper portion and a large lower portion; a pole including a cylindrical portion at an upper end of the pole and a head portion at an lower end of the pole; an insulating sleeve sheathed on the pole, the pole being configured to penetrate through the stepped through hole such that the head portion corresponds to a lower end of the stepped through hole and the cylindrical portion corresponds to an upper end of the stepped through hole; a bottom shell having an opening, the upper cover plate being configured to cover the opening to form an inner cavity with the bottom shell, and the liquid injection hole being communicated with the inner cavity; a battery winding core arranged in the inner cavity, and two electrodes of the battery winding core being electrically connected with the bottom shell and the pole respectively; and a sealing ball configured to be arranged on the upper cover plate and seal the liquid injection hole.

The button battery according to the embodiment of the present disclosure has at least the following beneficial effects: the upper cover plate, the pole and the insulating sleeve form a cover plate structure, since the head portion is buried in the stepped through hole, the cover plate structure has a small whole thickness and a small volume, and a space below the upper cover plate is not occupied by the pole, most internal space of the button battery can be used for accommodating the battery winding core, and the battery winding core with a larger volume and a larger capacity can be used, thus improving a capacity of the button battery. The insulating sleeve insulates the upper cover plate from the pole, and the whole cover plate structure and the whole button battery have a compact and ingenious structure. Electrolyte can be injected into the inner cavity through the liquid injection hole, gas generated by formation of the battery winding core can be discharged through the liquid injection hole, and then the liquid injection hole is sealed through the sealing ball to ensure a sealing performance of the button battery.

In some embodiments, a first annular flange is arranged on an outer circumferential surface at an upper end of the cylindrical portion, and an upper surface of the insulating sleeve is configured to abut against a lower surface of the first flange.

In some embodiments, an annular limiting groove is arranged on the outer circumferential surface of the cylindrical portion, and an annular protrusion matched with the limiting groove is arranged on an inner wall of the insulating sleeve.

In some embodiments, the battery winding core includes a positive plate, a negative plate and a separator, the positive plate and the negative plate are wound in the separator, and the positive plate and the negative plate are electrically connected with the pole and the bottom shell respectively.

In some embodiments, a second annular flange is arranged on an outer circumferential surface at an upper end of the upper cover plate, the upper cover plate is configured to extend into the opening, with a lower surface of the second flange abutting against a side wall of the opening.

In some embodiments, the insulating sleeve is a PP product or a PE product, the upper cover plate is made of stainless steel, aluminum or aluminum alloy, and the pole is made of nickel.

In some embodiments, a thickness of the upper cover plate is 0.5 mm to 3.0 mm, a diameter of the liquid injection hole is 0.1 mm to 1.5 mm, a diameter of the cylindrical portion is 1 mm to 4 mm, a diameter of the head portion is 3 mm to 8 mm, and a height of the lower end of the stepped through hole is 0.2 mm to 0.5 mm.

In a second aspect of the present disclosure, a method for manufacturing the button battery as described above is provided including: installing the pole and the insulating sleeve on the upper cover plate; loading the battery winding core into the bottom shell, installing the upper cover plate on the bottom shell to wrap the battery winding core with the bottom shell, and then welding the upper cover plate on the bottom shell; injecting an electrolyte into the inner cavity formed by the upper cover plate and the bottom shell through the liquid injection hole to enable formation of the battery winding core after aging; and sealing the liquid injection hole by using the sealing ball.

The method for manufacturing the button battery according to the embodiment of the present disclosure has at least the following beneficial effects: the pole and the insulating sleeve are installed on the upper cover plate first, which is convenient for subsequent wrapping and installation of the battery winding core by the upper cover plate and the bottom shell, and no other components interfere with the installation of the pole and the insulating sleeve, thus improving an efficiency of installing the pole and the insulating sleeve on the upper cover plate. The electrolyte can be quickly and conveniently injected into the inner cavity formed by the upper cover plate and the bottom shell through the liquid injection hole, gas generated by aging of the battery winding core can be discharged, and after balancing air pressures inside and outside the inner cavity, the liquid injection hole can be sealed through the sealing ball to ensure a sealing performance of the button battery.

In some embodiments, the installing the pole and the insulating sleeve on the upper cover plate includes: manufacturing the liquid injection hole and the stepped through hole with the small upper portion and the large lower portion in the upper cover plate; manufacturing the cylindrical portion and the head portion of the pole, then inserting the pole into the stepped through hole such that the cylindrical portion and the head portion correspond to upper and lower ends of the stepped through hole respectively; positioning the pole and the upper cover plate with respect to each other, and injecting an insulating material between the pole and the upper cover plate to form the insulating sleeve; and mounding the first flange at an upper end of the cylindrical portion.

In some embodiments, the method further includes: forming the battery winding core by winding a positive plate, a negative plate and a separator.

The additional aspects and advantages of the present disclosure will be partially provided in the following description, and will partially be apparent in the following description, or learned by practice of the present disclosure.

### BRIEF DESCRIPTION OF THE DRAWINGS

The above and/or additional aspects and advantages of the present disclosure will be apparent and easily understood from the description of the embodiments with reference to the following accompanying drawings, wherein:
FIG. 1 is a top view of a button battery according to an embodiment of the present disclosure;
FIG. 2 is a cross-sectional view of the button battery according to an embodiment of the present disclosure;
FIG. 3 is a semi-cross-sectional view of a cover plate structure shown in FIG. 1; and
FIG. 4 is a partially enlarged view of part A in FIG. 3.

### Reference numerals:

100 refers to upper cover plate, 110 refers to liquid injection hole, 120 refers to stepped through hole, 130 refers to second flange, 200 refers to pole, 210 refers to cylindrical portion, 220 refers to head portion, 211 refers to first flange, 212 refers to limiting groove, 300 refers to insulating sleeve, 310 refers to annular protrusion, 400 refers to bottom shell, 500 refers to battery winding core, 510 refers to positive plate, 520 refers to negative plate, 530 refers to separator, and 600 refers to sealing ball.

### DETAILED DESCRIPTION OF THE EMBODIMENTS

Reference will now be made in detail to the embodiments of the present invention, examples of which are illustrated in the accompanying drawings, wherein like reference numerals refer to the same or similar elements or elements having the same or similar functions throughout. The embodiments described below with reference to the accompanying drawings are illustrative only for the purpose of explaining the disclosure and are not to be construed as limiting the disclosure.

In the description of the disclosure, it should be understood that the positional descriptions referred to, for example, the directional or positional relationships indicated by upper, lower, front, rear, left, right, etc., are based on the directional or positional relationships shown in the drawings, and are only for convenience and simplification of description of the disclosure, but not for indicating or implying that the referred device or element must have a specific direction, be constructed and operated in a specific direction, and thus should not be construed as limiting the disclosure.

In the description of the present disclosure, "first", "second", etc., if referred to, are for the purpose of distinguishing technical features only, cannot be understood as indicating or implying a relative importance or implicitly indicating the number of technical features indicated or implicitly indicating the precedence of technical features indicated.

In the description of the disclosure, unless otherwise clearly defined, terms such as "arrange", "mount", "connect" should be understood in a broad sense, and those skilled in the art can reasonably determine the specific meanings of the above terms in the disclosure by combining the specific contents of the technical solutions.

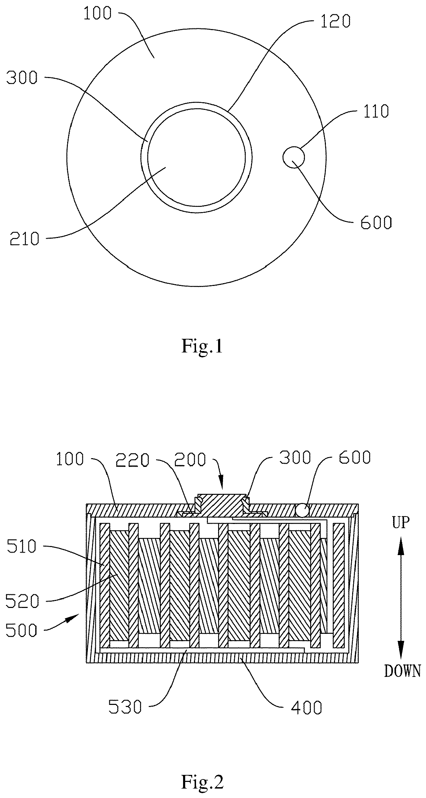

With reference to FIG. 1 and FIG. 2, the present disclosure discloses a button battery, which includes an upper cover plate 100, a pole 200, an insulating sleeve 300, a bottom shell 400, a battery winding core 500 and a sealing ball 600. The upper cover plate 100 is provided with a liquid injection hole 110 and a stepped through hole 120 with a small upper portion and a large lower portion. The pole 200 includes a cylindrical portion 210 at an upper end and a head portion 220 at a lower end. The insulating sleeve 300 is sheathed on the pole 200, the pole 200 penetrates through the stepped through hole 120, the head portion 220 corresponds to a lower end of the stepped through hole 120, and the cylindrical portion 210 corresponds to an upper end of the stepped through hole 120. The bottom shell 400 is provided with an opening, the upper cover plate 100 covers the opening to form an inner cavity with the bottom shell 400, and the liquid injection hole 110 is communicated with the inner cavity. The battery winding core 500 is arranged in the inner cavity, and two electrodes of the battery winding core 500 are electrically connected with the bottom shell 400 and the pole 200 respectively. The sealing ball 600 is arranged on the upper cover plate 100 and seals the liquid injection hole 110.

The upper cover plate 100, the pole 200 and the insulating sleeve 300 form a cover plate structure, the cylindrical portion 210 which carries the insulating sleeve 300 may be inserted into the stepped through hole 120 and extend out of the upper cover plate 100, and the head portion 220 abuts against an inner wall of the stepped through hole 120 through the insulating sleeve 300, so that the pole 200 and the upper cover plate 100 are relatively fixed. Since the head portion 220 is buried in the stepped through hole 120, the cover plate structure has a small whole thickness and a small volume, and a space below the upper cover plate 100 is not occupied by the pole 200, most internal space of the button battery can be used for accommodating the battery winding core 500, so that the battery winding core 500 with a larger volume and a larger capacity can be used, thus improving a capacity of the button battery. The insulating sleeve 300 insulates the upper cover plate 100 from the pole 200, and the whole cover plate structure and the whole button battery have a compact and ingenious structure. Electrolyte may be injected into the inner cavity through the liquid injection hole 110, gas generated by formation of the battery winding core 500 may be discharged through the liquid injection hole 110, and then the liquid injection hole 110 may be sealed through the sealing ball 600 to ensure a sealing performance of the button battery.

It can be understood that a lower surface of the head portion 220 is flush with a lower surface of the upper cover plate 100, so that the pole 200 does not occupy a space required by the battery winding core 500 downwardly, thus ensuring that the button battery has enough internal space for setting the battery winding core 500 with a large capacity. Moreover, the lower surface of the pole 200 is flat, which is beneficial for welding the battery winding core 500 with the pole 200. The upper surface of the cylindrical portion 210 may be flush with the upper surface of the upper cover plate 100. Certainly, the cylindrical portion 210 may also extend out of the upper cover plate 100, so that the cylindrical portion 210 protrudes from the upper cover plate 100.

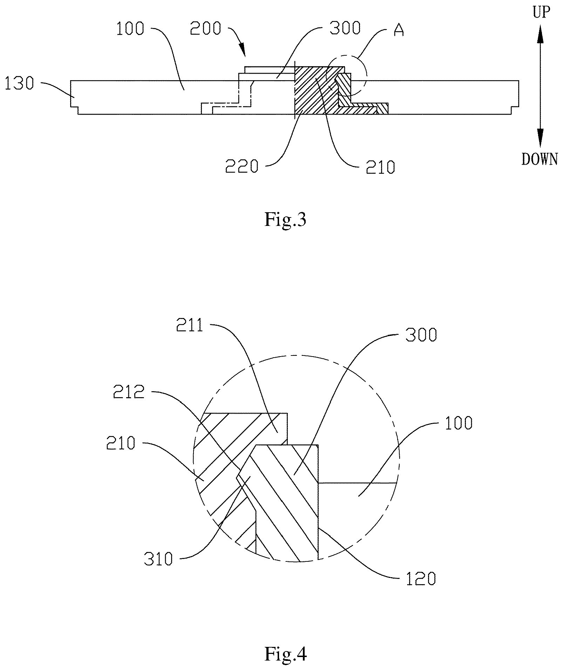

With reference to FIG. 3 and FIG. 4, a first annular flange 211 is arranged on an outer circumferential surface at an upper end of the cylindrical portion 210, and an upper surface of the insulating sleeve 300 abuts against a lower surface of the first flange 211. The first flange 211 may limit upward movement of the insulating sleeve 300 on the cylindrical portion 210, thus preventing the insulating sleeve 300 from falling off from the pole 200, and further ensuring insulation between the pole 200 and the upper cover plate 100. It should be understood that a diameter of the first flange 211 is smaller than a minimum diameter of the stepped through hole 120, so as to ensure that the upper end of the pole 200 extends above the upper cover plate 100. The first flange 211 is not sheathed with the insulating sleeve 300, and the first flange 211 extends out of the upper cover plate 100, so that a risk of short circuit between the first flange 211 and the upper cover plate 100 can be reduced.

In other embodiments, an annular limiting groove 212 is arranged on the outer circumferential surface of the cylindrical portion 210, and an annular protrusion 310 matched with the limiting groove 212 is arranged on an inner wall of the insulating sleeve 300. The annular protrusion 310 is clamped into the limiting groove 212, which can avoid a phenomenon that the insulating sleeve 300 slides up and down on the pole 200 and ensure insulation between the pole 200 and the upper cover plate 100.

In some embodiments of the present disclosure, the battery winding core 500 includes a positive plate 510, a negative plate 520 and a separator 530, the positive plate 510 and the negative plate 520 are wound in the separator 530, and the positive plate 510 and the negative plate 520 are electrically connected with the pole 200 and the bottom shell 400 respectively. The positive plate 510 and the negative plate 520 are alternately arranged to form an inner core, and the separator 530 is wound around the inner core to form the battery winding core 500. The positive plate 510 is composed of a positive active material, a binder and conductive carbon black. The positive active material may be composed of one or more of lithium cobalt oxides, lithium manganate, lithium nickel manganese cobalt, lithium nickel cobalt aluminate and lithium iron phosphate. The negative plate 520 is composed of a negative active material, a binder and conductive carbon black. The negative active material may be graphite, lithium titanate, a silicic acid negative electrode, an alloy negative electrode, and the like. The positive plate 510, the negative plate 520 and the separator 530 are wound into the required battery winding core 500.

In some embodiments of the present disclosure, a second annular flange 130 is arranged on an outer circumferential surface at an upper end of the upper cover plate 100, the upper cover plate 100 extends into the opening, and a lower surface of the second flange 130 abuts against a side wall of the opening. The upper cover plate 100 is clamped to the bottom shell 400 through cooperation of the second flange 130 with the opening, which is convenient for quick connection between the upper cover plate 100 and the bottom shell 400.

In some embodiments of the present disclosure, the upper cover plate 100 is provided with the liquid injection hole 110, the liquid injection hole 110 is communicated with the inner cavity formed by the bottom shell 400 and the upper cover plate 100, and the liquid injection hole 110 allows the electrolyte to pass through. The electrolyte can be conveniently and quickly injected into the inner cavity formed by the bottom shell 400 and the upper cover plate 100 through the reserved liquid injection hole 110.

In some embodiments of the present disclosure, the insulating sleeve 300 is a PP (polypropylene) product or a PE (polyethylene) product, and the PP product and the PE product are plastic products, which are convenient to obtain and low in price. PP and PE may be formed into the insulating sleeve 300 by low-temperature injection molding. The upper cover plate 100 is made of stainless steel, aluminum or aluminum alloy. Stainless steel, aluminum and aluminum alloy have a good structural strength and are commonly used materials, which are easy to obtain and process. The pole 200 is made of nickel. The sealing ball 600 may be a steel ball.

In some embodiments of the present disclosure, a thickness of the upper cover plate 100 may be 0.5 mm to 3.0 mm, a diameter of the liquid injection hole 110 may be 0.1 mm to 1.5 mm, a diameter of the cylindrical portion 210 may be 1 mm to 4 mm, a diameter of the head portion 220 may be 3 mm to 8 mm, and a height of the lower end of the stepped through hole 120 may be 0.2 mm to 0.5 mm.

In the embodiment, the thickness of the upper cover plate 100 is 1.0 mm, the diameter of the liquid injection hole 110 is 1.0 mm, the diameter of the cylindrical portion 210 is 3 mm, the diameter of the head portion 220 is 5 mm, and a diameter of the sealing ball 600 may be larger than a diameter of the liquid injection hole 110 by 0.2 mm to 0.3 mm.

The present disclosure discloses a method for manufacturing a button battery, which is used for manufacturing the above button battery, and includes steps a, b and c. At step a, the pole 200 and the insulating sleeve 300 are installed on the upper cover plate 100. At step b, the battery winding core 500 is arranged in the bottom shell 400, the upper cover plate 100 is installed on the bottom shell 400 to wrap the battery winding core 500 with the bottom shell 400, and then the upper cover plate 100 is welded with the bottom shell 400. At step c, an electrolyte is injected into an inner cavity formed by the upper cover plate 100 and the bottom shell 400 through the liquid injection hole 110, and formation of the battery winding core 500 occurs after aging. At step d, the liquid injection hole 110 is sealed by using the sealing ball 600.

The pole 200 and the insulating sleeve 300 are installed on the upper cover plate 100 first, which is convenient for subsequent wrapping and installation of the battery winding core 500 by the upper cover plate 100 and the bottom shell 400, and no other components interfere with the installation of the pole 200 and the insulating sleeve 300, thus improving an efficiency of installing the pole 200 and the insulating sleeve 300 on the upper cover plate 100. Electrolyte can be quickly and conveniently injected into the inner cavity formed by the upper cover plate 100 and the bottom shell 400 through the liquid injection hole 110, gas generated by aging of the battery winding core 500 can be discharged, and after balancing air pressures inside and outside the inner cavity, the liquid injection hole 110 can be sealed through the sealing ball 600 to ensure a sealing performance of the button battery.

In some embodiments of the present disclosure, the step a specifically includes the following sub-steps a1, a2, a3 and a4. At sub-step a1, the liquid injection hole 110 and the stepped through hole 120 with the small upper portion and the large lower portion are manufactured in the upper cover plate 100. At sub-step a2, the cylindrical portion 210 and the head portion 220 of the pole 200 are manufactured, then the pole 200 is inserted into the stepped through hole 120, and the cylindrical portion 210 and the head portion 220 correspond to upper and lower ends of the stepped through hole 120 respectively. In this way, the pole 200 does not occupy the space of the inner cavity formed by the upper cover plate 100 and the bottom shell 400, so that the battery winding core 500 with a larger volume and a larger capacity can be selected, and finally a capacity of the button battery can be maximized. At sub-step a3, the pole 200 and the upper cover plate 100 are positioned with each other, and an insulating material is injected between the pole 200 and the upper cover plate 100 to form the insulating sleeve 300. The insulating sleeve 300 is manufactured by injection molding, which can wrap the pole 200 well, thus ensuring insulation between the pole 200 and the upper cover plate 100. At sub-step a4, the first flange 211 is mounded at an upper end of the cylindrical portion 210. The pole 200 is expanded during mounding of the first flange 211, so that the stepped through hole 120 has a better sealing performance.

In some embodiments of the present disclosure, the method for manufacturing the button battery includes the following step before the step b: forming the battery winding core 500 by winding a positive plate 510, a negative plate 520 and a separator 530. The positive plate 510, the negative plate 520 and the separator 530 are manufactured into the battery winding core 500 in advance, so that the battery winding core 500 can be conveniently and quickly installed on the bottom shell 400.

The embodiments of the present disclosure are described in detail with reference to the accompanying drawings above, but the present disclosure is not limited to the above embodiments, and various changes may also be made within the knowledge scope of those of ordinary skills in the art without departing from the purpose of the present disclosure.

## Claims

1. A button battery, comprising:
an upper cover plate (100) having a liquid injection hole (110) and a stepped through hole (120) with a small upper portion and a large lower portion;
a pole (200) including a cylindrical portion (210) at an upper end of the pole (200) and a head portion (220) at an lower end of the pole (200);
an insulating sleeve (300) sheathed on the pole (200), the pole (200) being configured to penetrate through the stepped through hole (120) such that the head portion (220) corresponds to a lower end of the stepped through hole (120) and the cylindrical portion (210) corresponds to an upper end of the stepped through hole (120);
a bottom shell (400) having an opening, the upper cover plate (100) being configured to cover the opening to form an inner cavity with the bottom shell (400), and the liquid injection hole (110) being communicated with the inner cavity;
a battery winding core (500) arranged in the inner cavity, and two electrodes of the battery winding core (500) being electrically connected with the bottom shell (400) and the pole (200) respectively; and
a sealing ball (600) configured to be arranged on the upper cover plate (100) and seal the liquid injection hole (110).

2. The button battery according to claim 1, wherein a first annular flange (211) is arranged on an outer circumferential surface at an upper end of the cylindrical portion (210), and an upper surface of the insulating sleeve (300) is configured to abut against a lower surface of the first flange (211).

3. The button battery according to claim 1 or 2, wherein an annular limiting groove (212) is arranged on the outer circumferential surface of the cylindrical portion (210), and an annular protrusion (310) matched with the limiting groove (212) is arranged on an inner wall of the insulating sleeve (300).

4. The button battery according to claim 1 or 2, wherein the battery winding core (500) comprises a positive plate (510), a negative plate (520) and a separator (530), the positive plate (510) and the negative plate (520) are wound in the separator (530), and the positive plate (510) and the negative plate (520) are electrically connected with the pole (200) and the bottom shell (400) respectively.

5. The button battery according to claim 1, wherein a second annular flange (130) is arranged on an outer circumferential surface at an upper end of the upper cover plate (100), the upper cover plate (100) is configured to extend into the opening, with a lower surface of the second flange (130) abutting against a side wall of the opening.

6. The button battery according to claim 1, wherein the insulating sleeve (300) is a PP product or a PE product, the upper cover plate (100) is made of stainless steel, aluminum or aluminum alloy, and the pole (200) is made of nickel.

7. The button battery according to claim 1, wherein a thickness of the upper cover plate (100) is 0.5 mm to 3.0 mm, a diameter of the liquid injection hole (110) is 0.1 mm to 1.5 mm, a diameter of the cylindrical portion (210) is 1 mm to 4 mm, a diameter of the head portion (220) is 3 mm to 8 mm, and a height of the lower end of the stepped through hole (120) is 0.2 mm to 0.5 mm.

8. A method for manufacturing the button battery according to the claim 1, comprising:
installing the pole (200) and the insulating sleeve (300) on the upper cover plate (100);
loading the battery winding core (500) into the bottom shell (400), installing the upper cover plate (100) on the bottom shell (400) to wrap the battery winding core (500) with the bottom shell (400), and then welding the upper cover plate (100) on the bottom shell (400);
injecting an electrolyte into the inner cavity formed by the upper cover plate (100) and the bottom shell (400) through the liquid injection hole (110) to enable formation of the battery winding core (500) after aging; and
sealing the liquid injection hole (110) by using the sealing ball (600).

9. The method for manufacturing the button battery according to claim 8, wherein the installing the pole (200) and the insulating sleeve (300) on the upper cover plate (100) comprises:
manufacturing the liquid injection hole (110) and the stepped through hole (120) with the small upper portion and the large lower portion in the upper cover plate (100);
manufacturing the cylindrical portion (210) and the head portion (220) of the pole (200), then inserting the pole (200) into the stepped through hole (120) such that the cylindrical portion (210) and the head portion (220) correspond to upper and lower ends of the stepped through hole (120) respectively;
positioning the pole (200) and the upper cover plate (100) with respect to each other, and injecting an insulating material between the pole (200) and the upper cover plate (100) to form the insulating sleeve (300); and
mounding the first flange (211) at an upper end of the cylindrical portion (210).

10. The method for manufacturing the button battery according to claim 8, further comprising: forming the battery winding core (500) by winding a positive plate (510), a negative plate (520) and a separator (530).
